# EUROPEAN PATENT SPECIFICATION

(11) **EP 3 184 946 B1**
(45) Date of publication and mention of the grant of the patent: **22.11.2023**
(21) Application number: 15202508.6
(22) Date of filing: 23.12.2015
(51) Int. Cl.: F26B 23/00, C12C 1/073

(54) **DEVICE FOR DRYING WETTED MATERIAL**
VORRICHTUNG ZUM TROCKNEN VON FEUCHTEM MATERIAL
DISPOSITIF POUR SÉCHER UN MATÉRIAU HUMIDE

(43) Date of publication of application: 28.06.2017
(73) Proprietor: RWE Generation NL B.V., 4931 NC Geertruidenberg (NL)
(72) Inventor: Eurlings, Johannnes, Theodorus, Gerardus, Marie, 6125 RC Obbicht (NL)
(74) Representative: Keenway Patentanwälte Neumann Heine Taruttis

(56) References cited:
- EP-A1- 0 523 684
- EP-A1- 0 523 685
- EP-A1- 1 621 523
- WO-A1-2012/005164
- DE-A1- 2 800 238
- US-A- 5 016 361

## Description

The present invention relates to a device for drying wetted material.

Wetted material pursuant to the present invention can be wetted malt, wetted food, wetted paper or wetted paint, so that there is no restriction regarding the nature of the wetted material. The present invention will be described in the following with regard to wetted malt as wetted material to describe the functionality of the device for drying wetted material. Nevertheless, the device for drying wetted material according to the present invention can also be used for drying wetted food, wetted paper and wetted paint. Thereby it is to be mentioned that the relevant temperatures for drying paper (60 °C - 150 °C) are at an elevated temperature level compared to the temperatures (10 °C to 70 °C) mentioned with regard to the process of drying wetted malt.

The production of malt is an intermediate process for the production of beer. The malt has to be dried prior to shipment to beer breweries. In a malthouse malt is produced from malting barley (also known as brewing barley). Thereby, essential steps for the production of malt is the soaking of the malting barley, sprouting of the malting barley for producing wetted malt, and kiln-drying of the wetted malt.

At the beginning of the malt production the malting barley is soaked in water for approximately 24 hours. Subsequently, the wetted malting barley sprouts for approximately 5 to 7 days under controlled temperature conditions. After that time the sprouts are removed from the wetted malt. Thereafter, the wetted malt is fed into a kiln where the wetted malt is dried and torrefied (kiln-dried). This two batch process takes approximately 24 hours.

The process of drying and torrefying the wetted malt is very energy consuming. It is therefore an issue to reduce the energy consumption required for drying and torrefying the wetted malt.

DE 20 2008 006 186 U1 describes a device for recovering thermal energy from a kiln. For this purpose the device comprises a cross-flow heat exchanger which is arranged between an air inlet of the drying device and an air inlet of the kiln, wherein a first air inlet of the cross-flow heat exchanger is fluidly connected with the air inlet of the drying device and a first air outlet of the cross-flow heat exchanger is fluidly connected with the air inlet of the kiln. A second air inlet of the cross-flow heat exchanger is fluidly connected with an air outlet of the kiln, and a second air outlet of the cross-flow heat exchanger is fluidly connected with an air inlet of a heat pump which is thermally connected with a block heat and power plant. Therefore, heat from air exiting the kiln is used for preheating air sucked in through the air inlet of the drying device, so that the preheated air only has to be heated by the block heat and power plant for a lower temperature difference.

US 5,016,361 describes a method of extracting liquid from wet material in a fluidized bed, while DE28 00 238 A1 describes a method for drying corn, chip or fiber containing materials.

The object of the present invention is to provide a device for drying wetted material, preferably wetted malt, which exhibits an improved economic feasibility and/or an improved energy efficiency and which enables an enhanced degree of designing freedom for the components of the drying device.

This object is solved by a device for drying wetted material exhibiting the features of claim 1. Advantageous embodiments of the present invention are described in the dependent claims.

In detail, the device for drying wetted material according to the present invention comprises a kiln for accommodating the wetted material, a washing column, a heat pump and a radiator. Thereby, a device air inlet is fluidly connected with a radiator air inlet and a radiator air outlet is fluidly connected with a kiln air inlet. Moreover, a kiln air outlet is fluidly connected with a washing column air inlet and a washing column air outlet is fluidly connected with a device air outlet. Furthermore, a washing column water outlet is fluidly connected with a first heat pump water inlet and a first heat pump water outlet is fluidly connected with a washing column water inlet. A second heat pump water outlet is fluidly connected with a radiator water inlet and a radiator water outlet is fluidly connected with a second heat pump water inlet.

In this description "fluidly connected" means in general that the described parts are directly connected or indirectly connected with other parts in between. In any case a fluid stream is possible between the described parts.

In this description "thermally connected" means in general the described parts are directly connected or indirectly connected with other parts in between. In any case a transfer of thermal energy is possible between the described parts.

The invention is a device for drying wetted material according to claim 1.

The device for drying wetted material according to the present invention is therefore realized in that way, that regarding the air flow through the device the radiator is positioned downstream of the device air inlet. Moreover, the kiln is positioned downstream of the radiator. Furthermore, the washing column is positioned downstream of the kiln and the device air outlet is positioned downstream of the washing column. Due to the fluid connection of the air inlet, the radiator, the kiln, the washing column and the device air outlet air can flow from the device air inlet into the radiator, into the kiln, into the washing column and out of the device through the device air outlet. Due to the fluid connection of the washing column with the heat pump a first heat cycle between the washing column and the heat pump is realized. Due to the fluid connection of the heat pump with the radiator a second heat cycle is realized. Thermal energy extracted from the water exiting the washing column is transferred to the heat pump and thermal energy extracted from the heat pump is transferred to the radiator, where air sucked in through the device air inlet is heated.

The device according to the present invention exhibits the advantage that air exiting the kiln can be cooled in the washing column, so that the humidity of the air exiting the kiln is condensed out so that the latent heat of the air exiting the kiln is transferred into sensible heat of the water inside the washing column. The relative humidity of the air exiting the kiln is approximately 100%. This water is then transferred (pumped) to the heat pump wherein the heat transfer from the first heat cycle to the second heat cycle is enhanced, since water has a much higher thermal capacity than air. Heat pumps using water instead of air as a heat source are commercially available in a multi-MW range. Furthermore, since water is entering the heat pump as a heat source instead of drying air, equipment size of the heat pump is much smaller. Moreover, the fouling tendency of a heat pump evaporator is much smaller so that there are positive effects on both, the capital and the maintenance costs.

Moreover, the device for drying wetted material according to the present invention exhibits the advantage that a very high degree of designing freedom is achieved since the heat pump can be placed separated from the exhaust air from the kiln. Logically, exhaust air is vented at altitude, whereas the heat pump system is preferably mounted in a separate utility building at ground level, providing a sound/whether enclosure and best accessibility and maintainability.

The device for drying wetted malt also can be named a device for recovering heat from a kiln. The term "kiln" in this application is used as general term for all kinds of drying devices, in particular for a kiln in its original technical meaning or a drying cylinder or any device applying convective drying with hot air. The wetted material is usually wetted malt. The wetted material is moist material and moist malt, respectively. The kiln can also be named a drying chamber. The radiator is a heat exchanger so that throughout the present application the term "radiator" is used as general term for all kinds of heat exchangers.

The device air inlet and the device air outlet are fluidly connected with the atmosphere. The radiator air inlet and the radiator air outlet are fluidly connected with each other. The kiln air inlet and the kiln air outlet are fluidly connected with each other. The washing column air inlet and the washing air column outlet are also fluidly connected with each other.

The device is therefore adapted for sucking in air through the device air inlet, wherein the air is guided through the radiator, the kiln and the washing column and is ejected/expelled through the device air outlet.

The washing column is adapted for cooling air led into the washing column and is adapted for heating water led into the washing column. Inside the washing column, which also can be named a scrubber, the incoming air is cooled down by spraying the incoming moist air with cold water (in the range of 15°C) and bringing the water and the air in close contact by means of a packing.

The washing column and the heat pump form a first water heat cycle. The heat pump and the radiator form a second water heat cycle. The device is therefore adapted that heat from the first water heat cycle is transferred to the second water heat cycle and therefore to the radiator and via the radiator to the air sucked in through the device air intake.

The kiln comprises an inlet opening and an outlet opening, wherein heated air is supplied through the inlet opening into the kiln, wherein cooled and humidified air is expelled through the outlet opening.

The device according to the present invention uses the effect that the humidity of the warm and moist air from the kiln is condensed out in the washing column so that the latent heat from the warm humid air is transferred into heat of the water inside the washing column.

Moreover, the device can be described in that way that the device comprises an air intake channel, wherein in the air intake channel the radiator is positioned between the air intake of the device and the kiln. Moreover, the device comprises an outlet air channel positioned between the kiln and the air outlet of the device. In the outlet air channel the washing column is positioned between the kiln and the air outlet.

The second heat pump water outlet is fluidly and thereby thermally connected with the radiator water inlet, and the radiator water outlet is fluidly and thereby thermally connected with the second heat pump water inlet. Preferably, the device furthermore comprises a recirculation line fluidly connecting the washing column air outlet with the device air inlet. By providing the recirculation line air exiting the washing column via the washing column air outlet can be fed to an intake channel fluidly connected with the device air inlet. Inside the recirculation line a check valve can be positioned so that air can only flow from the washing column air outlet towards the device air inlet, but not the other way round.

The correspondingly built device enables a recirculation of cold air exiting the washing column back into the inlet of the device for the drying process. Moreover, the overall energy consumption of the device is reduced.

Preferably, the device further comprises a cross-flow heat exchanger wherein the device air inlet is fluidly connected with a first cross-flow heat exchanger inlet, wherein a first cross-flow heat exchanger outlet is fluidly connected with the radiator air inlet, wherein the kiln air outlet is fluidly connected with a second cross-flow heat exchanger inlet and wherein a second cross-flow heat exchanger outlet is fluidly connected with the washing column air inlet and/or an device air outlet.

The correspondingly realized device for drying wetted material exhibits an even higher energy efficiency so that less energy is needed for drying the wetted material, preferably the wetted malt.

Optionally or additionally, the device further comprises a cross-flow heat exchanger wherein the device air inlet is fluidly connected with a first cross-flow heat exchanger inlet, wherein a first cross-flow heat exchanger outlet is fluidly connected with the radiator air inlet, wherein the kiln air outlet is fluidly connected with a second cross-flow heat exchanger inlet and wherein a second cross-flow heat exchanger outlet is fluidly connected with the radiator air inlet.

The correspondingly realized device for drying wetted material exhibits the advantage that the thermal energy of the air exiting the kiln can be more effectively used for heating air sucked into the device via the device air inlet inside the radiator.

The cross-flow heat exchanger preferably is a glass tube heat exchanger. The first cross-flow heat exchanger inlet is fluidly connected with the first cross-flow heat exchanger outlet. The second cross-flow heat exchanger inlet is fluidly connected with the second cross-flow heat exchanger outlet. Therefore, air sucked in through the device air inlet is heated by a transfer of thermal energy through air expelled from the kiln.

Optionally, the device comprises a first valve which is arranged between the kiln air outlet and the washing column air inlet, wherein the first valve is fluidly connected with the kiln air outlet and the washing column air inlet.

The first valve is adapted for controlling an air flow into the washing column air inlet, wherein the air flow is exiting the kiln air outlet. In the case that the kiln air outlet is fluidly connected with the second cross-flow heat exchanger inlet and the washing column air inlet, the first valve is positioned downstream of a branch-off a conduit from the kiln air outlet to the second cross-flow heat exchanger inlet.

The correspondingly realized device for drying wetted material exhibits the advantage that the thermal energy of the air exiting the kiln via the kiln air outlet can be directed in a desired manner e.g. considering the ambient temperature and/or the temperature of the air exiting the kiln towards the cross-flow heat exchanger and/or towards the washing column. The correspondingly realized device therefore exhibits a higher adaptability on ambient conditions and/or on the development of the temperature of the air exiting the kiln. For that reason, the correspondingly realized device exhibits an even higher energy efficiency. For example the majority (e.g. 80-90%) of air exiting the kiln is fed to the washing column and the remaining air exiting the kiln (e.g. 10-20%) is fed to the cross-flow heat exchanger.

More preferably, the second cross-flow heat exchanger outlet is also fluidly connected with the device air outlet.

Even more preferably, the device exhibits a second valve which is arranged between the first cross-flow heat exchanger outlet and the second cross-flow heat exchanger outlet, wherein the second valve is fluidly connected with the first cross-flow heat exchanger outlet and the second cross-flow heat exchanger outlet.

The second valve is adapted for controlling the amount of recirculation. As the pressure at the first cross-flow heat exchanger outlet is lower than the pressure at the second cross-flow heat exchanger outlet, exhaust air is sucked in again at the opening of the second valve.

The correspondingly built device for drying wetted material exhibits a higher adaptability on ambient conditions. For example, at temperatures below 10°C the moist air exiting the cross-flow heat exchanger is recycled towards the radiator air inlet for more effectively heating the air sucked into the device via the device air inlet.

Preferably, the device for drying wetted material comprises a heat buffer, wherein the second heat pump outlet is fluidly connected with a first heat buffer inlet, wherein a first heat buffer outlet is fluidly connected with a second heat pump inlet, wherein a second heat buffer outlet is fluidly connected with the radiator water inlet, and wherein the radiator water outlet is fluidly connected with a second heat buffer inlet.

A correspondingly realized device for drying wetted material offers the advantage that there is no explicit need for a 2-line/2-batch system enabling heat recovery from each other since heat, recovered during the drying modes and cooling modes, can be stored in the heat buffer.

Heat gathered/gained by the heat pump is transferred to the heat buffer. Moreover, heat from the heat buffer is transferred to the radiator.

Preferably, the heat buffer is realized as a warm water heat buffer.

Preferably, the device for drying wetted material further comprises a heating device adapted for heating the heat buffer.

The heating device is preferably realized as an electrical heating coil, which also can be named a start-up coil arranged inside the heat buffer.

The heating device can be driven by renewable energy (created by wind, water, solar and so on) so that any natural gas infrastructure can be made obsolete. Moreover, the heating device can be driven by an oil and/or gas fired warm water boiler.

Preferably, the device for drying wetted material further comprises an auxiliary heat pump and auxiliary heat buffer, wherein the second heat buffer outlet is fluidly connected with a first auxiliary heat pump water inlet, and wherein a first auxiliary heat pump outlet is fluidly connected with the second heat buffer inlet, and wherein a second auxiliary heat pump outlet is fluidly connected with a hot water port of the auxiliary heat buffer and with the radiator water inlet, and wherein a second auxiliary heat pump inlet is fluidly connected with a cold water port of the auxiliary heat buffer.

A correspondingly realized device for drying wetted material offers the advantage that the wetted material, preferably the wetted malt, can be dried in a first batch process and can be torrefied in a second batch process.

Preferably, the device for drying wetted material is arranged in that way that the radiator water outlet is fluidly connected with an auxiliary heat buffer water inlet.

Therefore, a first heat cycle between the auxiliary heat buffer and the auxiliary heat pump and a second heat cycle between the auxiliary heat buffer and the radiator are established, wherein heat from the auxiliary heat buffer is transferred to the radiator and therefore to the air drying the material (the malt) inside the kiln.

Preferably, the device for drying wetted material comprises a second kiln additionally to the first kiln, wherein the radiator air outlet is fluidly connected with a second kiln air inlet and wherein a second kiln air outlet is fluidly connected with the washing column air inlet.

More preferably, the second kiln air outlet is fluidly connected with the second cross-flow heat exchanger inlet.

By providing a second kiln in the device for drying wetted material the flexibility of the device is enhanced. Moreover, the overall energy efficiency is enhanced.

Preferably, the device for drying wetted material is arranged in that way that the heat buffer is arranged in an utility building which can be positioned essentially a ground level.

Preferably, the heat pump also can be positioned inside the building at essentially ground level.

A correspondingly realized device exhibits the advantage that the heating medium inside the heat buffer which preferably is water does not need to be pumped up into a high level (high altitude) so that the overall potential energy of the heat buffer is reduced and pumps for pumping the water inside the heat buffer can be reduced in their size.

Preferably, the device comprises a ventilator which is arranged between the washing column air outlet and the device air outlet, wherein the ventilator is fluidly connected with the washing column air outlet and the device air outlet and is adapted to convey air towards the device air outlet.

Thereby, the split of air exceeding the kiln (kilns) between the cross-flow heat exchanger and the washing column can be controlled by a fan/ventilator which is mounted on top of the washing column above the water spraying grid. The fan/ventilator therefore assists in sucking air exiting the second cross-flow heat exchanger outlet into the washing column.

Preferably, the device for drying wetted material is realized in that way that the heat buffer and the auxiliary heat buffer are arranged in an utility building which can be positioned essentially at ground level.

Preferably, also the auxiliary heat pump can be positioned inside the utility building at ground level.

Further advantages, details and features of the present invention are explained in the description of the following embodiments. Thereby,
- figure 1:: shows a schematic diagram of a device for drying wetted material according to a first embodiment of the present invention;
- figure 2:: shows a schematic diagram of a device for drying wetted material according to a second embodiment of the present invention;
- figure 3:: shows a schematic diagram of a device for drying wetted material according to a third embodiment of the present invention;
- figure 4:: a schematic diagram of a device for drying wetted material which is not part of the invention; and
- figure 5:: a schematic diagram of a device for drying wetted material which is not part of the invention.

In the following description same reference numerals describe same elements and same features, respectively, so that a description of one element conducted with reference to one figure is also valid for the other figures, so that a repetition of the respective description is omitted.

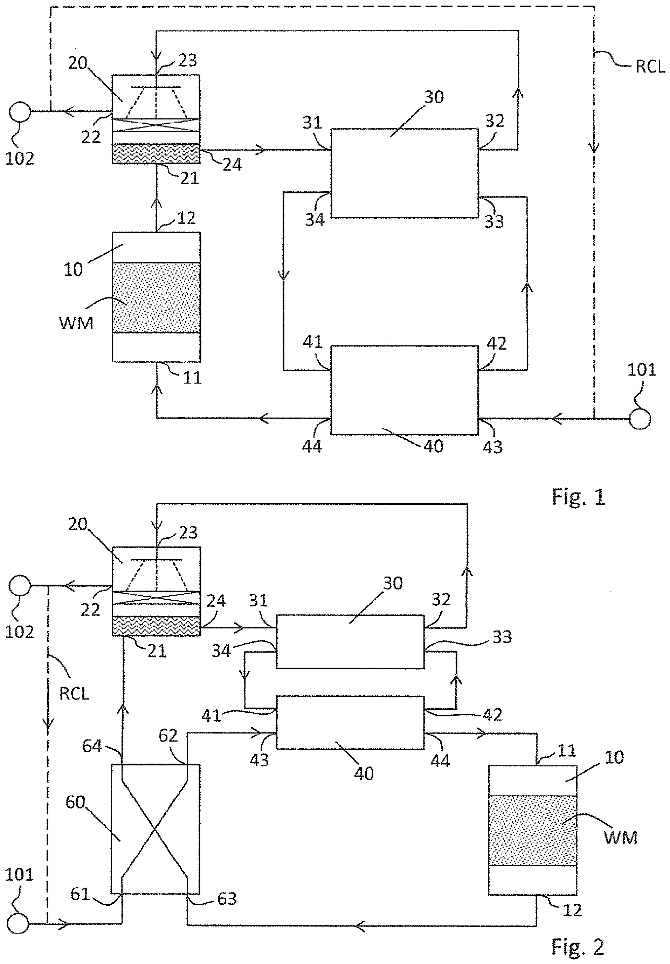

Figure 1 shows a schematic diagram of a device 100 for drying wetted material according to a first embodiment of the present invention. Wetted material in the sense of the present invention can be wetted malt, wetted food, wetted paper or wetted paint, so that there is no restriction regarding the nature of the wetted material. The present invention will be described in the following with regard to wetted malt as wetted material to describe the functionality of the device 100 for drying wetted material. Nevertheless, the device 100 for drying wetted material according to the present invention can also be used for drying wetted food, wetted paper and wetted paint.

The device 100 for drying wetted material WM comprises a kiln 10 for accommodating the wetted material WM, a washing column 20 which also can be named a scrubber 20, a heat pump 30 and a radiator 40. Air is sucked into the device 100 through a device air inlet 101 which is usually fluidly connected with the atmosphere. The sucked in air can be conveyed to the radiator 40 via a vent which is not shown in figure 1. The device air inlet 101 is fluidly connected with a radiator air inlet 43 of the radiator 40 via a duct. The air conveyed into the radiator 40 is heated in the radiator 40 and exits the radiator 40 via a radiator air outlet 44. The heated air is conveyed towards the kiln 10, wherein a kiln air inlet 11 is fluidly connected with the radiator air outlet 44 via a duct. The wetted material WM is arranged inside the kiln 10 and the air conveyed into the kiln 10 flows through the wetted material WM and exits the kiln 10 via a kiln air outlet 12. The temperature of the air entering the kiln 10 in a drying process is approximately 50 °C, wherein the air exiting the kiln 10 exhibits a temperature of about 26 °C. The relative humidity of the air exiting the kiln 10 is approximately 100 %.

The kiln 10 is in fluid communication with the washing column 20, wherein the kiln air outlet 12 is fluidly connected with a washing column air inlet 21. Inside the washing column 20 the air is brought into close contact with cold water. Thereby, the moist and warm air is cooled down so that the humidity of the air is condensed out and latent heat is transferred into sensible heat of the water. This results into a heating of the water from approximately 15 °C to approximately 18-19 °C and a cooling of the air from about 24-26 °C to approximately 18-19 °C. The cooled air exits the washing column 20 via a washing column air outlet 22 which is in fluid communication with a device air outlet 102.

The air exiting the washing column 20 also can be conveyed to the device air inlet 101 via a recirculation line RCL, so that the washing column air outlet 22 is fluidly connected with the device air inlet 101. A corresponding arrangement results in a lower energy consumption of the device 100. The recirculation line RCL is not necessarily included in the device 100 and can be left out.

With regard to the airflow the radiator 40 is positioned downstream of the device air inlet 101, the kiln 10 is positioned downstream of the radiator 40, the washing column 20 is positioned downstream of the kiln 10 and the device air outlet 102 is positioned downstream of the washing column 20.

The washing column 20 also comprises a washing column water outlet 24 which is fluidly connected with a first heat pump water inlet 31. A first heat pump water outlet 32 is fluidly connected with a washing column water inlet 23. Therefore, water is circulated between the washing column 20 and the heat pump 30. The water can be conveyed via a pump which is not shown in figure 1.

The water is heated in the washing column 20 via the air entering the washing column 20 via the washing column air inlet 21 and the heated water exits the washing column 20 via the washing column water outlet 24 and enters the heat pump 30 via the first heat pump inlet 31. The heat energy of the water entering the heat pump 30 then is transferred to another heat cycle which is realized between the heat pump 30 and the radiator 40. The water entering the heat pump 30 exhibits a temperature of about 18-19 °C and the water exiting the heat pump 30 via the first heat pump outlet 32 exhibits a temperature of approximately 15-16 °C.

The first heat pump outlet 32 is fluidly connected with a washing column water inlet 23. Therefore, the water cooled inside the heat pump 30 enters the washing column 20 via the washing column water inlet 23. Therefore, a heat cycle between the washing column 20 and the heat pump 30 is realized, wherein thermal energy of the water exiting the washing column 20 is transferred via the heat pump 30 to a second heat cycle between the heat pump 30 and the radiator 40.

A second heat pump outlet 34 is fluidly and therefore thermally connected with a radiator water inlet 41 and a radiator water outlet 42 is fluidly and therefore thermally connected with a second heat pump inlet 33. The water is thereby conveyed via pumps which are not shown in figure 1 between the heat pump 30 and the radiator 40. Consequently, a second heat cycle is realized between the heat pump 30 and the radiator 40.

Thermal energy from water exiting the washing column 20 is transferred via the heat pump 30 to the radiator 40 and to air flowing through the radiator 40 from the radiator air inlet 43 to the radiator air outlet 44.

Figure 2 shows a schematic diagram of a device 100 for drying wetted material WM according to a second embodiment of the present invention. The device 100 according to the second invention furthermore comprises a cross-flow heat exchanger 60 which can be realized as a glass tube heat exchanger 60.

A first cross-flow heat exchanger inlet 61 is fluidly connected with the device air inlet 101 via a duct. A first cross-flow heat exchanger outlet 62 which is fluidly connected with the first cross-flow heat exchanger inlet 61 also is fluidly connected with the radiator air inlet 43. Therefore, the device air inlet 61 is fluidly connected with the radiator air inlet 43 via the cross-flow heat exchanger 60.

The kiln air outlet 12 is fluidly connected with a second cross-flow heat exchanger inlet 63 via a duct, and a second cross-flow heat exchanger outlet 64 is fluidly connected with the washing column air inlet 21 via a duct.

Therefore, air entering the cross-flow heat exchanger 60 through the first cross-flow heat exchanger inlet 61 is heated by air exiting the kiln 10 via the kiln air outlet 12 and entering the cross-flow heat exchanger 60 via the second cross-flow heat exchanger inlet 63. The temperature of the air exiting the kiln 10 is approximately 26 °C and the air exiting the cross-flow heat exchanger 60 via the second cross-flow heat exchanger outlet 64 exhibits a temperature of approximately 24-25 °C. The air sucked in through the device air inlet 101 into the cross-flow heat exchanger 60 thereby is heated from a temperature of approximately 18 °C to approximately 23 °C.

The remaining functionality of the device 100 for drying wetted material WM according to the second embodiment is identical to the functionality and the construction of the device 100 for drying wetted material WM according to the first embodiment and therefore it is referred to the description of the first embodiment of the device 100.

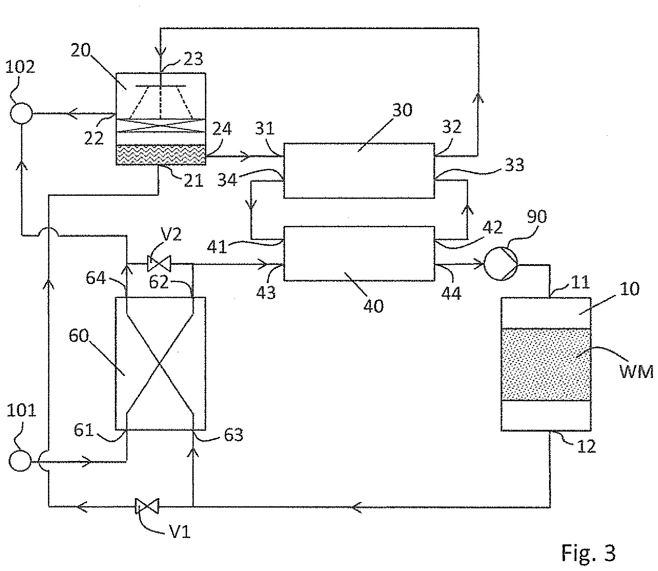

Figure 3 shows a device 100 for drying wetted material WM according to a third embodiment of the present invention. The device 100 according to the third invention also comprises the cross-flow heat exchanger 60 which can be realized as a glass tube heat exchanger 60.

The first cross-flow heat exchanger inlet 61 is fluidly connected with the device air inlet 101 via a duct. The first cross-flow heat exchanger outlet 62 which is fluidly connected with the first cross-flow heat exchanger inlet 61 also is fluidly connected with the radiator air inlet 43. Therefore, the device air inlet 61 is fluidly connected with the radiator air inlet 43 via the cross-flow heat exchanger 60.

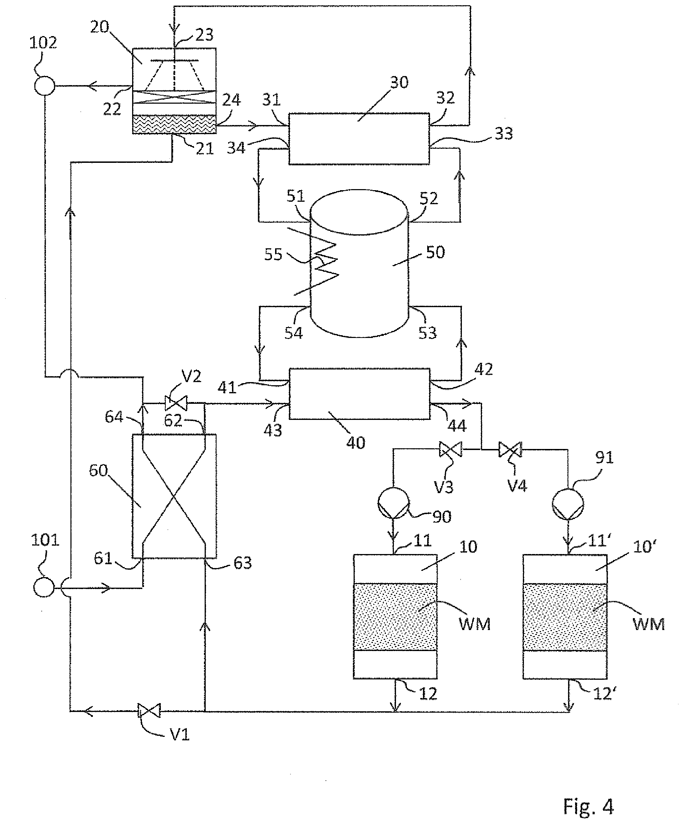

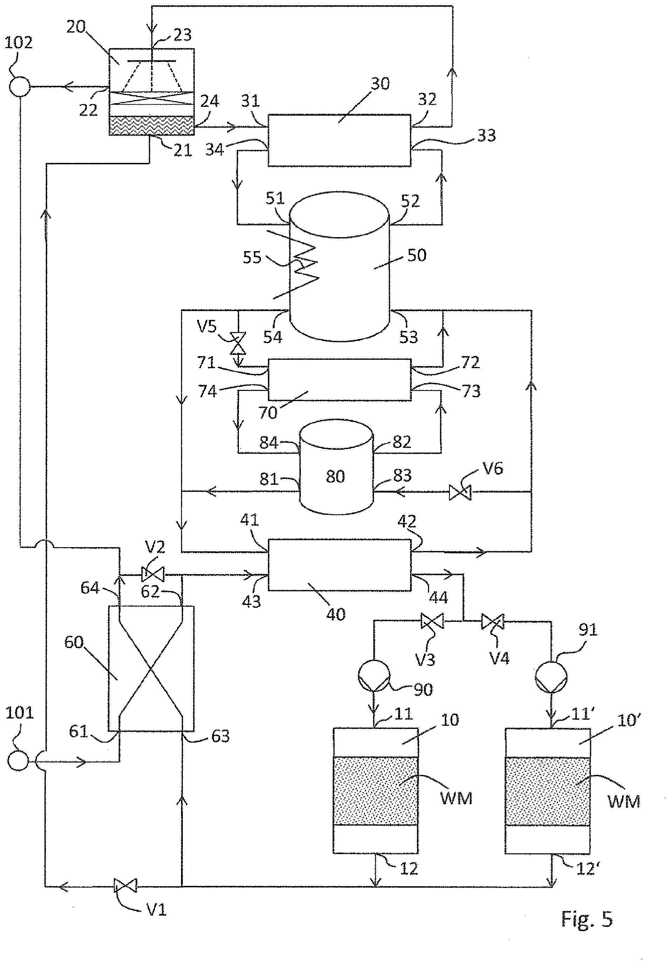

The kiln air outlet 12 is fluidly connected with the second cross-flow heat exchanger inlet 63 via a duct. The kiln air outlet 12 is also fluidly connected with the washing column air inlet 21, wherein a first valve V1 is arranged between the kiln air outlet 12 and the washing column air inlet 21, wherein the first valve V1 is fluidly connected with the kiln air outlet 12 and the washing column air inlet 21. The first valve V1 is adapted for controlling an air flow into the washing column air inlet 21, wherein the air flow is exiting the kiln air outlet 12. The first valve V1 is positioned downstream of a branch-off a conduit from the kiln air outlet 12 to the second cross-flow heat exchanger inlet 63. It is to be mentioned that the first valve V1 is only optional and no essential feature and therefore can be left out of the device 100. The first valves V1 shown in figures 4 and 5 also can be left out of the device 100.

The second cross-flow heat exchanger outlet 64 is fluidly connected with the radiator air inlet 43. Moreover, the second cross-flow heat exchanger outlet 64 is fluidly connected with the device air outlet 102. The device 100 exhibits a second valve V2 which is arranged between the cross-flow heat exchanger outlet 64 and the first cross-flow heat exchanger outlet 62, wherein the second valve V2 is fluidly connected with the cross-flow heat exchanger outlet 64 and the first cross-flow heat exchanger outlet 62. The second valve V2 is adapted for controlling the amount of recirculation. As the pressure at the first cross-flow heat exchanger outlet 62 is lower than the pressure at the second cross-flow heat exchanger outlet 64, exhaust air is sucked in again at the opening of the second valve V2. Therefore, air entering the cross-flow heat exchanger 60 through the first cross-flow heat exchanger inlet 61 is heated by air exiting the kiln 10 via the kiln air outlet 12 and entering the cross-flow heat exchanger 60 via the second cross-flow heat exchanger inlet 63.

Figure 3 shows that the device 100 comprises a ventilator 90 which is positioned between the radiator air outlet 44 and the kiln air inlet 11. The ventilator 90 is fluidly connected with the radiator air outlet 44 and the kiln air inlet 11 and is adapted to convey the air exiting the radiator air outlet 44 into the kiln air inlet 11. The ventilator 90 can also be part of the devices 100 according to the first and second embodiments, even though not shown in figures 1 and 2.

The remaining functionality of the device 100 for drying wetted material WM according to the third embodiment is identical to the functionality and the construction of the device 100 for drying wetted material WM according to the second embodiment and therefore it is referred to the description of the second embodiment of the device 100.

Figure 4 shows a device 100 for drying wetted material WM which is not part of the invention.

The device 100 furthermore comprises a heat buffer 50 which is realized as a warm water heat buffer 50. The second heat pump outlet 34 is fluidly connected with a first heat buffer inlet 51 and a first heat buffer outlet 52 is fluidly connected with the second heat pump inlet 33. Therefore, thermal energy extracted from the water exiting the washing column 20 via a washing column water outlet 24 and entering the heat pump 30 via the first heat pump inlet 31 is transferred into the heat buffer 50 via the heat pump 30.

A second heat buffer outlet 54 is fluidly connected with a radiator water inlet 41 and the radiator water outlet 42 is fluidly connected with a second heat buffer inlet 53 of the heat buffer 50. Therefore, thermal energy is transferred from the heat buffer 50 to the radiator 40 so that air entering the radiator via the radiator air inlet 43 can be heated and can exit the radiator 40 in a heated condition via the radiator air outlet 44.

The device 100 furthermore comprises a heating device 55 which can be realized as an electrical heat coil 55 and which can also be named a start-up coil 55.

The device 100 which is not part of the invention comprises a second kiln 10' additionally to the first kiln 10, wherein the radiator air outlet 44 is fluidly connected with a second kiln air inlet 11', and wherein a second kiln air outlet 12' is fluidly connected with the washing column air inlet 21.

Moreover, the second kiln air outlet 12' is fluidly connected with the second cross-flow heat exchanger inlet 63.

Figure 4 shows that the device 100 comprises a second ventilator 91 which is positioned between the radiator air outlet 44 and second the kiln air inlet 11'. The second ventilator 91 is fluidly connected with the radiator air outlet 44 and the second kiln air inlet 11' and is adapted to convey the air exiting the radiator air outlet 44 into the second kiln air inlet 11'.

The device 100 which is not part of the invention also comprises a third valve V3 and a fourth valve V4. The third valve V3 and the fourth valve V4 are fluidly connected with the radiator air outlet 44. The third valve V3 is also fluidly connected with the first ventilator 90 and therefore with the first kiln air inlet 11. The fourth valve V4 is also fluidly connected with the second ventilator 91 and therefore with the second kiln air inlet 11'. The third and fourth valves V3 and V4 therefore can be used to direct the air flow out of the radiator air outlet 44 into the first kiln 10 and/or into the second kiln 10'

The devices according to the first to third embodiments of the present invention also can comprise a second kiln 10'.

The remaining functionality of the device 100 which is not part of the invention is identical to the functionality of the device 100 according to the third embodiment of the present invention so that it is referred to the corresponding description for the third embodiment and the first embodiment of the present invention.

Moreover, the cross-flow heat exchanger 60 shown in figure 4 is not essential and can be left out. In this case, that is when the cross-flow heat exchanger 60 is left out from the device 100 which is not part of the invention the device air inlet 101 is directly fluidly connected with the radiator air inlet 43 and the first kiln air outlet 12 and the second kiln air outlet 12' are directly fluidly connected with the washing column air inlet 21.

Figure 5 shows a schematic diagram of the device 100 for drying wetted material WM which is not part of the invention. The device 100 which is not part of the invention furthermore comprises an auxiliary heat pump 70 and an auxiliary heat buffer 80. Thereby, the second heat buffer outlet 54 is fluidly connected with a first auxiliary heat pump water inlet 71 and a first auxiliary heat pump outlet 72 is fluidly connected with the second heat buffer inlet 53. Moreover, a second auxiliary heat pump outlet 74 is fluidly connected with a first heat buffer water inlet 84 of the auxiliary heat buffer 80. A second auxiliary heat pump inlet 73 is fluidly connected with a cold water port 82 of the auxiliary heat buffer 80.

The device 100 which is not part of the invention exhibits the functionality that water extracted from the heat buffer 50 via the second heat buffer outlet 54 can be used for heating the auxiliary heat buffer 80 which is realized as an auxiliary warm water heat buffer 80 via the auxiliary heat pump 70. The auxiliary heat buffer 80 then is used for heating the radiator 40 to a higher temperature so that the air entering the radiator 40 via the radiator air inlet 43 can be heated to a higher temperature for kiln-drying the wetted material WM, preferably the wetter malt inside the kiln 10.

The water inside the auxiliary heat buffer 80 is usually heated up to a temperature of 95 °C so that the air exiting the radiator 40 can exhibit a temperature of approximately 80 °C. Figure 5 shows that the radiator water outlet 42 is fluidly connected with a second auxiliary heat buffer water inlet 83.

Moreover, even though not shown in figure 5, the heat pump 30, the heat buffer 50, the auxiliary heat buffer 80 and the auxiliary heat pump 70 can be positioned in a building. The building is preferably positioned essentially at ground level.

The device 100 which is not part of the invention can be used in that way, that wetted malt can be dried by the device 100 using the heat buffer 50 for heating the radiator 40 so that air entering the radiator 40 via the radiator air inlet 43 is heated up to a temperature of about 50 °C. This drying process lasts for about 24 hours. After the drying process is finished the malt inside the first kiln 10 and or the second kiln 10' usually is dry and has to be kiln-dried in a kiln-drying process subsequent to the drying process.

In the kiln-drying process the malt inside the first kiln 10 and/or the second kiln 10' is heated to a temperature of approximately 75-85 °C. This temperature is achieved by using the auxiliary heat buffer 80 which provides warm water of a temperature of approximately 95 °C to the radiator 40. Therefore, the air entering the radiator 40 via the radiator air inlet 43 can be heated to a temperature of 75-85 °C and exits the radiator 40 via the radiator air outlet 44 for kiln-drying the mould inside the kiln 10. This method step is used for achieving a desired quality of the malt for different beer types.

In the third embodiment the split of air exceeding the kiln (kilns) between the cross-flow heat exchanger 60 and the washing column 20 can be controlled by a fan/ventilator which is mounted on top of the washing column 20 above the water spraying grid. The fan/ventilator therefore assists in sucking air exiting the second cross-flow heat exchanger outlet 64 into the washing column 20. The fan/ventilator therefore can be positioned between the washing column air outlet 22 and the device air outlet 102. In this case, the first valve V1 can be left out of the device 100.

In figures 3, 4 and 5 the recirculation line RCL fluidly connecting the washing column air outlet 22 with the device air inlet 101 is not shown. Nevertheless, the devices 100 in figures 3, 4 and 5 also can comprise the recirculation line RCL.

### List of reference numerals:

- 10: (first) kiln / drying chamber / malt dryer
- 10': (second) kiln / drying chamber / malt dryer11 (first) kiln air inlet
- 11': (second) kiln air inlet
- 12: (first) kiln air outlet
- 12': (second) kiln air outlet

- 20: washing column / scrubber
- 21: washing column air inlet
- 22: washing column air outlet
- 23: washing column water inlet
- 24: washing column water outlet

- 30: (first) heat pump
- 31: first heat pump inlet / first heat pump water inlet
- 32: first heat pump outlet / first heat pump water outlet
- 33: second heat pump inlet / second heat pump water inlet
- 34: second heat pump outlet / second heat pump water outlet

- 40: radiator
- 41: radiator water inlet
- 42: radiator water outlet
- 43: radiator air inlet
- 44: radiator air outlet

- 50: (main) heat buffer / warm water heat buffer
- 51: first heat buffer inlet / first heat buffer water inlet
- 52: first heat buffer outlet / first heat buffer water outlet
- 53: second heat buffer inlet / second heat buffer water inlet
- 54: second heat buffer outlet / second heat buffer water outlet
- 55: heating device / electrical heating coil / start up coil

- 60: cross-flow heat exchanger / glass tube heat exchanger
- 61: first cross-flow heat exchanger inlet
- 62: first cross-flow heat exchanger outlet
- 63: second cross-flow heat exchanger inlet
- 64: second cross-flow heat exchanger outlet

- 70: auxiliary heat pump
- 71: first auxiliary heat pump inlet / first auxiliary heat pump water inlet
- 72: first auxiliary heat pump outlet / first auxiliary heat pump water outlet
- 73: second auxiliary heat pump inlet / second auxiliary heat pump water inlet
- 74: second auxiliary heat pump outlet / second auxiliary heat pump water outlet

- 80: auxiliary heat buffer / auxiliary warm water heat buffer
- 81: hot water port (of the auxiliary heat buffer)
- 82: cold water port (of the auxiliary heat buffer)
- 83: second auxiliary heat buffer water inlet
- 84: first auxiliary heat buffer water inlet

- 90: (first) ventilator
- 91: (second) ventilator

- 100: device (for drying wetted material)
- 101: device air inlet
- 102: device air outlet

- RCL: recirculation line
- V1: (first) valve
- V2: (second) valve
- V3: (third) valve
- V4: (fourth) valve
- V5: (fifth) valve
- V6: (sixth) valve
- WM: wetted material / wetted malt / moist malt

## Claims

1. Device (100) for drying wetted material (WM), wherein the device (100) comprises at least one kiln (10) for accommodating the wetted material (WM), a washing column (20), a heat pump (30), and a radiator (40), wherein
a device air inlet (101) is fluidly connected with a radiator air inlet (43);
a radiator air outlet (44) is fluidly connected with a kiln air inlet (11);
a kiln air outlet (12) is fluidly connected with a washing column air inlet (21);
a washing column air outlet (22) is fluidly connected with a device air outlet (102);
a washing column water outlet (24) is fluidly connected with a first heat pump water inlet (31) and a first heat pump water outlet (32) is fluidly connected with a washing column water inlet (23); **characterized in that**
a second heat pump water outlet (34) is fluidly connected with a radiator water inlet (41) and a radiator water outlet (42) is fluidly connected with a second heat pump water inlet (33).

2. Device (100) according to claim 1, **characterized in that** the device (100) further comprises a recirculation line (RCL) fluidly connecting the washing column air outlet (22) with the device air inlet (101).

3. Device (100) according to any of the preceding claims, **characterized in that** the device (100) further comprises a cross-flow heat exchanger (60), wherein
the device air inlet (101) is fluidly connected with a first cross-flow heat exchanger inlet (61);
a first cross-flow heat exchanger outlet (62) is fluidly connected with the radiator air inlet (43);
the kiln air outlet (12) is fluidly connected with a second cross-flow heat exchanger inlet (63); and
a second cross-flow heat exchanger outlet (64) is fluidly connected with the washing column air inlet (21) and/or the device air outlet (102) and/or the radiator air inlet (43).

4. Device (100) according to claim 3, **characterized in that** a first valve (V1) is arranged between the kiln air outlet (12) and the washing column air inlet (21), wherein the first valve (V1) is fluidly connected with the kiln air outlet (12) and the washing column air inlet (21).

5. Device according to claim 3 or 4, **characterized in that** a second valve (V2) is arranged between the first cross-flow heat exchanger outlet (62) and the second cross-flow heat exchanger outlet (64), wherein the second valve (V2) is fluidly connected with the first cross-flow heat exchanger outlet (62) and the second cross-flow heat exchanger outlet (64).

6. Device (100) according to any of the preceding claims, **characterized in that** the device (100) further comprises heating a device (55) adapted for heating the radiator (40).

7. Device (100) according to any of the preceding claims, **characterized in that** the device (100) additionally to the first kiln (10) further comprises a second kiln (10'), wherein
the radiator air outlet (44) is fluidly connected with a second kiln air inlet (11'); and
a second kiln air outlet (12') is fluidly connected with the washing column air inlet (21).

8. Device (100) according to claim 7, **characterized in that** the second kiln air outlet (12') is fluidly connected with the second cross-flow heat exchanger inlet (63).

9. Device (100) according to any of the preceding claims, **characterized in that** a ventilator is arranged between the washing column air outlet (22) and the device air outlet (102), wherein the ventilator is fluidly connected with the washing column air outlet (22) and the device air outlet (102) and is adapted to convey air towards the device air outlet (102).

## Patentansprüche

1. Vorrichtung (100) zum Trocknen von feuchtem Material (WM), wobei die Vorrichtung (100) zumindest einen Ofen (10) zum Aufnehmen des feuchten Materials (WM), eine Waschkolonne (20), eine Wärmepumpe (30) und einen Radiator (40) umfasst, wobei
ein Vorrichtungslufteinlass (101) fluidisch mit einem Radiatorlufteinlass (43) verbunden ist;
ein Radiatorluftauslass (44) fluidisch mit einem Ofenlufteinlass (11) verbunden ist;
ein Ofenluftauslass (12) fluidisch mit einem Waschkolonnenlufteinlass (21) verbunden ist;
ein Waschkolonnenluftauslass (22) fluidisch mit einem Vorrichtungsluftauslass (102) verbunden ist;
ein Waschkolonnenwasserauslass (24) fluidisch mit einem ersten Wärmepumpenwassereinlass (31) verbunden ist und ein erster Wärmepumpenwasserauslass (32) fluidisch mit einem Waschkolonnenwassereinlass (23) verbunden ist;
**dadurch gekennzeichnet, dass**
ein zweiter Wärmepumpenwasserauslass (34) fluidisch mit einem Radiatorwassereinlass (41) verbunden ist und ein Radiatorwasserauslass (42) fluidisch mit einem zweiten Wärmepumpenwassereinlass (33) verbunden ist.

2. Vorrichtung (100) nach Anspruch 1, **dadurch gekennzeichnet, dass** die Vorrichtung (100) ferner eine Umwälzleitung (RCL) umfasst, die den Waschkolonnenluftauslass (22) fluidisch mit dem Vorrichtungslufteinlass (101) verbindet.

3. Vorrichtung (100) nach einem der vorhergehenden Ansprüche, **dadurch gekennzeichnet, dass** die Vorrichtung (100) ferner einen Kreuzstromwärmetauscher (60) umfasst, wobei
der Vorrichtungslufteinlass (101) fluidisch mit einem ersten Kreuzstromwärmetauschereinlass (61) verbunden ist;
ein erster Kreuzstromwärmetauscherauslass (62) fluidisch mit dem Radiatorlufteinlass (43) verbunden ist;
der Ofenluftauslass (12) fluidisch mit einem zweiten Kreuzstromwärmetauschereinlass (63) verbunden ist; und
ein zweiter Kreuzstromwärmetauscherauslass (64) fluidisch mit dem Waschkolonnenlufteinlass (21) und/oder dem Vorrichtungsluftauslass (102) und/oder dem Radiatorlufteinlass (43) verbunden ist.

4. Vorrichtung (100) nach Anspruch 3, **dadurch gekennzeichnet, dass** ein erstes Ventil (V1) zwischen dem Ofenluftauslass (12) und dem Waschkolonnenlufteinlass (21) angeordnet ist, wobei das erste Ventil (V1) fluidisch mit dem Ofenluftauslass (12) und dem Waschkolonnenlufteinlass (21) verbunden ist.

5. Vorrichtung nach Anspruch 3 oder 4, **dadurch gekennzeichnet, dass** ein zweites Ventil (V2) zwischen dem ersten Kreuzstromwärmetauscherauslass (62) und dem zweiten Kreuzstromwärmetauscherauslass (64) angeordnet ist, wobei das zweite Ventil (V2) fluidisch mit dem ersten Kreuzstromwärmetauscherauslass (62) und dem zweiten Kreuzstromwärmetauscherauslass (64) verbunden ist.

6. Vorrichtung (100) nach einem der vorhergehenden Ansprüche, **dadurch gekennzeichnet, dass** die Vorrichtung (100) ferner eine Erwärmungsvorrichtung (55) umfasst, die zum Erwärmen des Radiators (40) eingerichtet ist.

7. Vorrichtung (100) nach einem der vorhergehenden Ansprüche, **dadurch gekennzeichnet, dass** die Vorrichtung (100) zusätzlich zum ersten Ofen (10) ferner einen zweiten Ofen (10') umfasst, wobei
der Radiatorluftauslass (44) fluidisch mit einem zweiten Ofenlufteinlass (11') verbunden ist; und
ein zweiter Ofenluftauslass (12') fluidisch mit dem Waschkolonnenlufteinlass (21) verbunden ist.

8. Vorrichtung (100) nach Anspruch 7, **dadurch gekennzeichnet, dass** der zweite Ofenluftauslass (12') fluidisch mit dem zweiten Kreuzstromwärmetauschereinlass (63) verbunden ist.

9. Vorrichtung (100) nach einem der vorhergehenden Ansprüche, **dadurch gekennzeichnet, dass** ein Ventilator zwischen dem Waschkolonnenluftauslass (22) und dem Vorrichtungsluftauslass (102) angeordnet ist, wobei der Ventilator fluidisch mit dem Waschkolonnenluftauslass (22) und dem Vorrichtungsluftauslass (102) verbunden ist und eingerichtet ist zum Befördern von Luft in Richtung des Vorrichtungsluftauslasses (102).

## Revendications

1. Dispositif (100) pour sécher un matériau humide (WM), dans lequel le dispositif (100) comprend au moins un four (10) pour recevoir le matériau humide (WM), une colonne de lavage (20), une pompe à chaleur (30), et un radiateur (40), dans lequel
une entrée d'air de dispositif (101) est en liaison hydraulique avec une entrée d'air de radiateur (43) ;
une sortie d'air de radiateur (44) est en liaison hydraulique avec une entrée d'air de four (11) ;
une sortie d'air de four (12) est en liaison hydraulique avec une entrée d'air de colonne de lavage (21) ;
une sortie d'air de colonne de lavage (22) est en liaison hydraulique avec une sortie d'air de dispositif (102) ;
une sortie d'eau de colonne de lavage (24) est en liaison hydraulique avec une première entrée d'eau de pompe à chaleur (31) et une première sortie d'eau de pompe à chaleur (32) est en liaison hydraulique avec une entrée d'eau de colonne de lavage (23) ;
**caractérisé en ce que**
une seconde sortie d'eau de pompe à chaleur (34) est en liaison hydraulique avec une entrée d'eau de radiateur (41) et une sortie d'eau de radiateur (42) est en liaison hydraulique avec une seconde entrée d'eau de pompe à chaleur (33).

2. Dispositif (100) selon la revendication 1, **caractérisé en ce que** le dispositif (100) comprend en outre une ligne de recirculation (RCL) reliant par liaison hydraulique la sortie d'air de colonne de lavage (22) à l'entrée d'air de dispositif (101).

3. Dispositif (100) selon l'une quelconque des revendications précédentes, **caractérisé en ce que** le dispositif (100) comprend en outre un échangeur thermique à courants croisés (60), dans lequel
l'entrée d'air de dispositif (101) est en liaison hydraulique avec une première entrée d'échangeur thermique à courants croisés (61) ;
une première sortie d'échangeur thermique à courants croisés (62) est en liaison hydraulique avec l'entrée d'air de radiateur (43) ;
la sortie d'air de four (12) est en liaison hydraulique avec une seconde entrée d'échangeur thermique à courants croisés (63) ; et
une seconde sortie d'échangeur thermique à courants croisés (64) est en liaison hydraulique avec l'entrée d'air de colonne de lavage (21) et/ou la sortie d'air de dispositif (102) et/ou l'entrée d'air de radiateur (43).

4. Dispositif (100) selon la revendication 3, **caractérisé en ce qu'**une première vanne (V1) est disposée entre la sortie d'air de four (12) et l'entrée d'air de colonne de lavage (21), dans lequel la première vanne (V1) est en liaison hydraulique avec la sortie d'air de four (12) et l'entrée d'air de colonne de lavage (21).

5. Dispositif selon la revendication 3 ou 4, **caractérisé en ce qu'**une seconde vanne (V2) est disposée entre la première sortie d'échangeur thermique à courants croisés (62) et la seconde sortie d'échangeur thermique à courants croisés (64), dans lequel la seconde vanne (V2) est en liaison hydraulique avec la première sortie d'échangeur thermique à courants croisés (62) et la seconde sortie d'échangeur thermique à courants croisés (64) .

6. Dispositif (100) selon l'une quelconque des revendications précédentes, **caractérisé en ce que** le dispositif (100) comprend en outre un dispositif de chauffage (55) conçu pour chauffer le radiateur (40).

7. Dispositif (100) selon l'une quelconque des revendications précédentes, **caractérisé en ce que** le dispositif (100), en plus du premier four (10), comprend en outre un second four (10'), dans lequel
la sortie d'air de radiateur (44) est en liaison hydraulique avec une entrée d'air de second four (11') ; et
une sortie d'air de second four (12') est en liaison hydraulique avec l'entrée d'air de colonne de lavage (21) .

8. Dispositif selon la revendication 7, **caractérisé en ce que** la sortie d'air de second four (12') est en liaison hydraulique avec la seconde entrée d'échangeur thermique à courants croisés (63).

9. Dispositif (100) selon l'une quelconque des revendications précédentes, **caractérisé en ce qu'**un ventilateur est disposé entre la sortie d'air de colonne de lavage (22) et la sortie d'air de dispositif (102), dans lequel le ventilateur est en liaison hydraulique avec la sortie d'air de colonne de lavage (22) et la sortie d'air de dispositif (102) et est conçu pour transporter de l'air vers la sortie d'air de dispositif (102).
